(19) Europäisches Patentamt
European Patent Office
Office européen des brevets

(11) EP 0 693 495 B1

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.[7]: **C07F 9/12**, C08K 5/523, C08L 69/00, C07F 9/09 // (C08L69/00, 25:02, 27:12, 51:00, 67:02)

(21) Anmeldenummer: **95110783.8**

(22) Anmeldetag: **11.07.1995**

(54) **Mehrkernige Phosphorsäureester**

Phosphoric acid esters having several phosphor atoms

Esters d'acide phosphorique ayant plusieurs atomes de phosphore

(84) Benannte Vertragsstaaten:
**DE ES FR GB IT NL**

(30) Priorität: **22.07.1994 DE 4426128**

(43) Veröffentlichungstag der Anmeldung:
**24.01.1996 Patentblatt 1996/04**

(73) Patentinhaber: **BAYER AG**
**51368 Leverkusen (DE)**

(72) Erfinder:
- **Podszun, Wolfgang, Dr.**
  **D-51061 Köln (DE)**
- **Eckel, Thomas, Dr.**
  **D-41540 Dormagen (DE)**

(56) Entgegenhaltungen:

| | |
|---|---|
| **EP-A- 0 286 253** | **EP-A- 0 345 522** |
| **EP-A- 0 363 608** | **EP-A- 0 406 934** |
| **EP-A- 0 428 221** | **DE-A- 2 921 325** |
| **GB-A- 734 766** | **GB-A- 2 061 949** |
| **US-A- 3 976 616** | **US-A- 5 272 193** |

- **CHEMICAL ABSTRACTS, vol. 081, no. 20, 18. November 1974, Columbus, Ohio, US; abstract no. 121909, HASHIMOTO T ET AL 'Fire***-resistant cellulose fibers and films' & JP 49 032 939 A (NITTO BOSEKI CO., LTD.) 26 M{rz 1974**
- **CHEMICAL ABSTRACTS, vol. 081, no. 20, 18. November 1974, Columbus, Ohio, US; abstract no. 121871, HASHIMOTO T ET AL 'Organic phosphorus compounds' & JP 49 031 650 A (NITTO BOSEKI CO., LTD.) 22 M{rz 1974**
- **CHEMICAL ABSTRACTS, vol. 081, no. 22, 2. Dezember 1974, Columbus, Ohio, US; abstract no. 136919, HATA N ET AL 'Fire***-resistant vinyl halide resin compositions' & JP 49 040 342 A (ASAHI DENKA KOGYO K. K.) 15 April 1974**
- **CHEMICAL ABSTRACTS, vol. 095, no. 21, 23. November 1981, Columbus, Ohio, US; abstract no. 186842, 'Organic phosphorus compounds' & JP 56 051 492 A (KYODO CHEMICAL CO., LTD.;JAPAN) 09 Mai 1981**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 693 495 B1

Printed by Jouve, 75001 PARIS (FR)

## Beschreibung

Die vorliegende Erfindung betrifft mehrkernige Phosphorsäureester, die sich von Phenolen und aliphatischen Polyolen ableiten, ihre Verwendung als Flammschutzmittel in thermoplastischen Kunststoffen, sowie die thermoplastischen Formmassen.

Aromatische Phosphorsäureester, wie z.B. Triphenylphosphat, sind hoch wirksame Flammschutzmittel für thermoplastische Kunststoffe, wie z.B. Polycarbonat. In US-A. 5 061 745 werden beispielsweise Polymermischungen aus aromatischem Polycarbonat, ABS-Pfropfpolymerisat und/oder styrolhaltigem Copolymer und Monophosphaten als Flammschutzadditive beschrieben. Ein Nachteil dieser einkernigen Phosphorsäureester ist ihre gute Diffusionsfähigkeit und unzureichende Schwerflüchtigkeit, die zu einer unerwünschten Migration des Flammschutzmittels im Formteil führen kann. Siehe auch US. A- 5 272 193.

Die DE-A 2 921 325 beschreibt flammabweisende Polycarbonatmassen aus einem aromatischen Polycarbonat und einer Phosphorverbindung, die beispielsweise der nachfolgenden Formel entspricht:

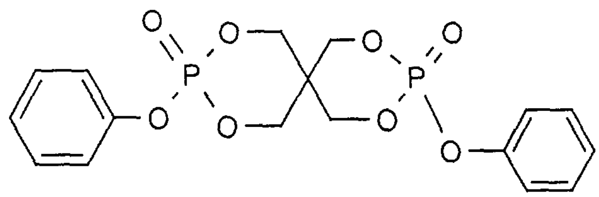

Die Migrationsfähigkeit dieser Phosphorverbindung ist allerdings ebenfalls beträchtlich.

US-A- 5 204 394 beschreibt rein aromatische mehrkernige Phosphorsäureester, die in speziellen Rezepturen Vorteile als Flammschutzmittel bringen können.

US-A 3,976,616 lehrt, Phosphate als Weichmacher in PVC einzusetzen, enthält aber keinen Hinweis darauf, die Phosphate in PC einzusetzen.

EP-A 0 428 221 lehrt die Verwendung von Triphenylphosphat zur Viskositätserniedrigung von flüssigen Flammschutzmitteln wie bromierten Polyaryloxiden und oligomeren Phosphatestern.

JP-A 7,432,939 und JP-A 7,431,650 lehren die Verwendung von organischen Phosphorverbindungen in regenerierter Cellulose und allgemein synthetischen Polymeren.

JP-A 7,440,342 lehrt, dass Phosphate als "fire-retardant-plasticizer" in PVC eingesetzt werden.

Die Aufgabe der vorliegenden Erfindung ist die Bereitstellung von Phosphorsäureestern mit hoher Flammschutzwirkung, niedriger Flüchtigkeit, geringer Migrationsneigung und guten Verarbeitungseigenschaften.

Gegenstand der Erfindung sind mehrkernige Phosphorsäureester der Formel (I)

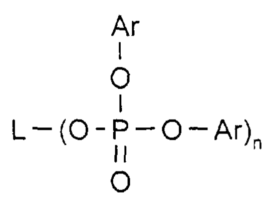

(I)

worin

L für die folgenden Strukturen steht:

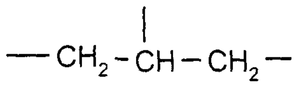

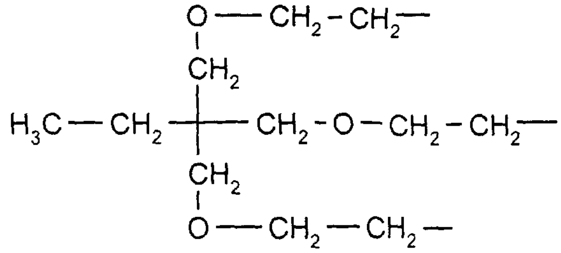

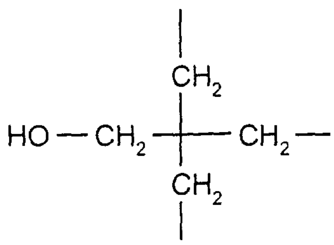

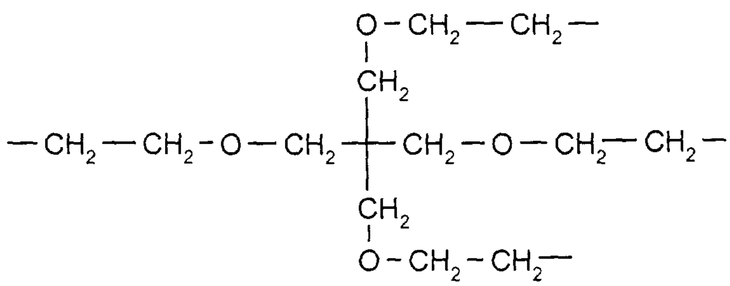

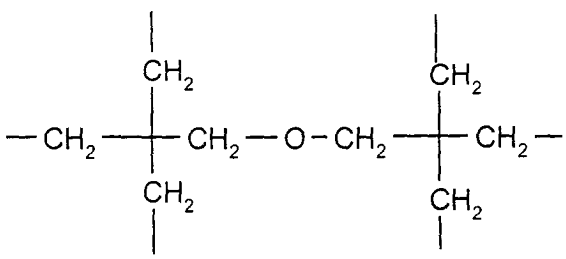

Ar ein Arylrest oder Alkarylrest ist

und

n 3, 4 oder 6 ist.

Ar steht insbesondere für Phenyl, Tolyl, Xylenyl, p-Octylphenyl, p-Butylphenyl, Naphthyl.

Ar steht besonders bevorzugt für Phenyl.

Beispielhaft seien die folgenden mehrkernigen Phosphorsäureester genannt:

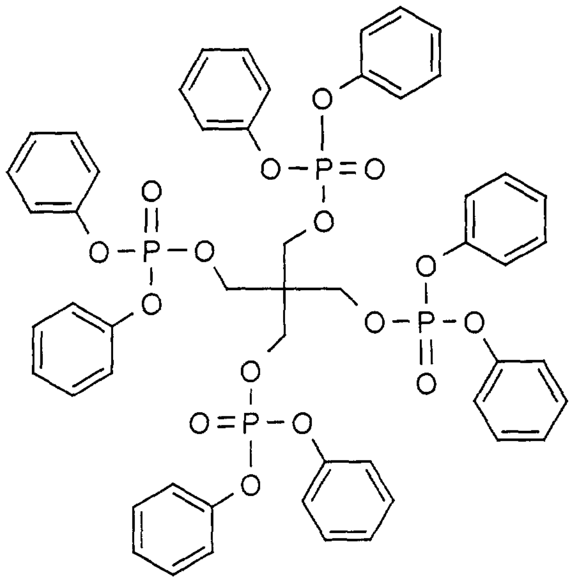

Formel (Ia)

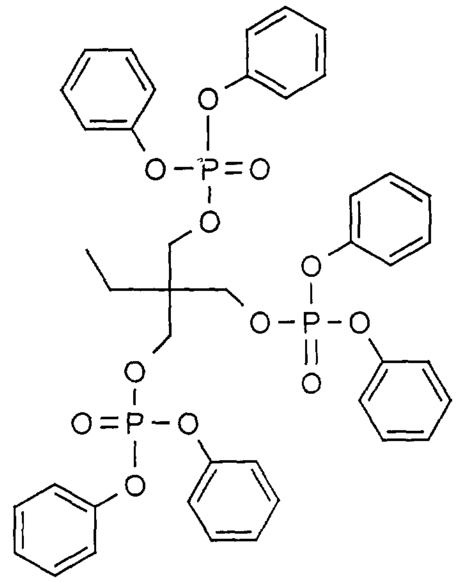

Formel (Ib)

Die mehrkemigen Phosphorsäureester können sowohl in reiner Form als auch als Gemisch aus höher- und niedermolekularen Verbindungen eingesetzt werden.

Die Synthese der erfindungsgemäßen Phosphorsäureester in reiner Form erfolgt zweckmäßigerweise durch Umsetzung von Diarylchlorophosphat mit der zugrundeliegenden aliphatischen Hydroxyalkylverbindung in einem absoluten organischen Lösungsmittel in Anwesenheit eines Säurefängers. Im Allgemeinen wird die Reaktion bei Temperaturen von -30°C bis +70°C, bevorzugt -10°C bis +10°C durchgeführt. Beispiele für geeignete Lösungsmittel sind Chloroform, Methylenchlorid, tert.-Butylmethylether und Methylethylketon. Als Säurefänger eignen sich Amine, beispielsweise Dicyclohexylamin oder Triethylamin.

Anstelle von Diarylchlorophosphat kann man auch von Phosphoroxychlorid ausgehen und dieses zunächst mit zwei Mol Phenol umsetzen, und anschließend ohne weitere Aufarbeitung die Umsetzung mit der aliphatischen Hydroxyalkylverbindung durchführen.

Das Reaktionsprodukt enthält in diesem Falle Anteile an höher- und niedermolekularen Verbindungen. Das entstehende Produktgemisch ist ebenfalls als Flammschutzmittel gut geeignet.

Die erfindungsgemäßen Phosphorsäureester eignen sich zur Flammschutzausrüstung von thermoplastischen Kunststoffen, insbesondere von Polycarbonaten und Mischungen von Polycarbonaten mit beispielsweise Styrolpolymerisaten.

Die Einsatzmenge an Phosphorsäurester beträgt im allgemeinen 0.5-20 Gew.-%, vorzugsweise 3-18% Gew.-%.

Die Einarbeitung des Flammschutzmittels in den thermoplastischen Kunststoff ist unkritisch, sie kann z.B. durch Compoundieren in der Schmelze mit Hilfe eines Kneters oder Extruders oder auch in Lösung erfolgen.

Gegenstand der Erfindung sind weiterhin thermoplastische Formmassen enthaltend

A) 40 bis 98, vorzugsweise 60 bis 97 Gew.-Teilen aromatisches Polycarbonat, und

D) 0,5 bis 20, bevorzugt 1 bis 18, besonders bevorzugt 2 bis 15 Gew.-Teilen mehrkerniger Phosphorsäureester der Formel (I)

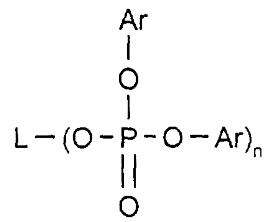

worin

L ein n-wertiger linearer oder verzweigter aliphatischer Kohlenwasserstoffrest mit 2 bis 30 C-Atomen ist, der mit OH substituiert sein kann und bis zu 8 Etherbrücken enthalten kann,

Ar ein Arylrest oder Alkylarylrest ist

und

n 2 bis 6 ist,

wobei eines oder mehrere Polymere, ausgewählt aus der Gruppe der folgenden Komponenten zusätzlich enthalten sein kann:

B) 3 bis 50, vorzugsweise 5 bis 40 Gew.-Teile Vinyl-Copolymerisat aus

B.1) 50 bis 98, vorzugsweise 60 bis 95 Gew.-Teilen Styrol, α-Methylstyrol, kernsubstituierten Styrolen, $C_1$-$C_8$-Alkylmethacrylaten, $C_1$-$C_8$-Alkylacrylaten oder Mischungen daraus und

B.2) 50 bis 2, vorzugsweise 40 bis 5 Gew.-Teilen Acrylnitril, Methacrylnitril, $C_1$-C8-Alkylmethacrylaten, $C_1$-$C_8$-Alkylacrylaten, Maleinsäureanhydrid, N-substituierten Maleinimiden und Mischungen daraus,

C) 0,5 bis 40, vorzugsweise 1 bis 20 Gew.-Teilen Pfropfpolymerisat,

E) 0,05 bis 5 Gew.-Teilen, vorzugsweise 0,1 bis 1 Gew.-Teil fluoriertes Polyolefin mit einem mittleren Teilchendurchmesser von 0,05 bis 1000 µm, einer Dichte von 1,2 bis 2,3 g/$cm^3$ und einem Fluorgehalt von 65 bis 76 Gew.-%,

F) 2 bis 30, vorzugsweise 5 bis 25 Gew.-Teile Polyalkylenterephthalat.

Die Summe aller Gewichtsteile A+B+C+D+E+F ergibt 100.

Die thermoplastische Formmasse kann also neben Polycarbonat und Flammschutzmittel Copolymerisat und/oder Pfropfpolymerisat gemäß C) und/oder PTFE gemäß E) und/oder Polyalkylenterephthalat gemäß F) enthalten.

Komponente A

Erfindungsgemäß geeignete, thermoplastische, aromatische Polycarbonate gemäß Komponente A sind solche auf Basis der Diphenole der Formel (II)

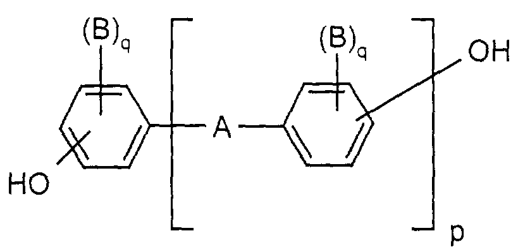

(II)

worin

A eine Einfachbindung, $C_1$-$C_5$-Alkylen, $C_2$-$C_5$-Alkyliden, $C_5$-$C_6$-Cycloalkyliden, -S- oder -$SO_2$-,

B Chlor oder Brom,

q 0, 1 oder 2, und

p 1 oder 0 sind

oder alkylsubstituierte Dihydroxyphenylcycloalkane der Formel (III),

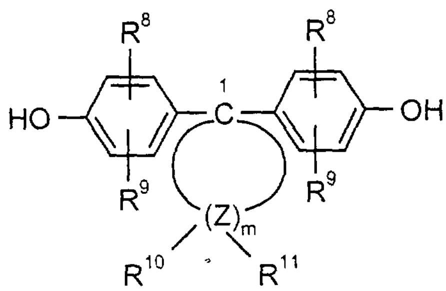

(III)

worin

$R^8$ und $R^9$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4, 5, 6 oder 7, bevorzugt 4 oder 5,

$R^{10}$ und $R^{11}$ für jedes Z individuell wählbar, unabhängig voneinander Wasserstoff oder $C_1$-$C_6$-Alkyl

und

z Kohlenstoff bedeuten, mit der Maßgabe, daß an mindestens einem Atom Z $R^{10}$ und $R^{11}$ gleichzeitig Alkyl bedeuten.

Geeignete Diphenole der Formel (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dibrom-4-hydroxyphenyl)-propan.

Bevorzugte Diphenole der Formel (II) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (III) sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.

Erfindungsgemäß geeignete Polycarbonate sind sowohl Homopolycarbonate als auch Copolycarbonate.

Komponente A kann auch eine Mischung der vorstehend definierten thermoplastischen Poylcarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A-2 842 005 oder Monoalkylphenol bzw. Dialkylphenol mit insgesamt 8 bis 20 C-Atomen in den Alkylsubstituenten gemäß DE-A-3 506 472, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethyl-heptyl)-phenol.

Die Menge an Kettenabbrechern beträgt im allgemeinen zwischen 0,5 und 10 Mol%, bezogen auf die Summe der jeweils eingesetzten Diphenole der Formel (II) und/oder (III).

Die erfindungsgemäß geeigneten Polycarbonate A haben mittlere Molekulargewichte ($\overline{M}w$, Gewichtsmittel, gemessen z.B. durch Ultrazentrifugation oder Streulichtmessung) von 10 000 bis 200 000, vorzugsweise 20 000 bis 80 000.

Die erfindungsgemäß geeigneten Polycarbonate A können in bekannter Weise verzweigt sein, und zwar vorzugsweise durch den Einbau von 0,05 bis 2 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan und die Copolycarbonate von Bisphenol A mit bis zu 60 Mol-%, bezogen auf die Mol-Summen an Diphenolen, 1,1 -Bis-(4-hydroxyphenyl)-3,3,5-trimethylcyclohexan.

Die Polycarbonate A können teilweise oder vollständig durch aromatische Polyestercarbonate ersetzt werden.

Komponente B

Erfindungsgemäß einsetzbare Vinyl-Copolymerisate gemäß Komponente B sind solche aus wenigstens einem Monomeren aus der Reihe: Styrol, α-Methylstyrol und/oder kernsubstituierten Styrolen $C_1$-$C_8$-Alkylmethacrylat, $C_1$-$C_8$-Alkylacrylat (B.1) mit wenigstens einem Monomeren aus der Reihe: Acrylnitril, Methacrylnitril, $C_1$-$C_8$-Alkylmethacrylat, $C_1$-$C_8$-Alkylacrylat. Maleinsäureanhydrid und/oder N-substituiertem Maleinimid (B.2).

$C_1$-$C_8$-Alkylacrylate bzw. $C_1$-$C_8$-Alkylmethacrylate sind Ester der Acrylsäure bzw. Methacrylsäure und einwertiger Alkohole mit 1 bi s 8 C-Atomen. Besonders bevorzugt sind Methacrylsäuremethylester, -ethylester und -propylester. Als besonders bevorzugter Methacrylsäureester wird Methylmethacrylat genannt.

Thermoplastische Copolymerisate mit einer Zusammensetzung gemäß Komponente B können bei der Pfropfpolymerisation zur Herstellung der Komponente C als Nebenprodukte entstehen, besonders dann, wenn große Mengen Monomere auf kleine Mengen Kautschuk gepfropft werden. Die erfindungsgemäß einzusetzende Menge an Copolymerisat B bezieht diese Nebenprodukte der Pfropfpolymerisation nicht mit ein.

Die Copolymerisate gemäß Komponente B sind harzartig thermoplastisch und kautschukfrei.

Die thermoplastischen Copolymerisate B enthalten 50 bis 98, vorzugsweise 60 bis 95 Gew.-Teile B.1 und 50 bis 2, vorzugsweise 40 bis 5 Gew.-Teile B.2.

Besonders bevorzugte Copolymerisate B sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Die Styrol-Acrylnitril-Copolymerisate gemäß Komponente B sind bekannt und lassen sich durch radikalische Polymerisation, insbesondere durch Emulsions-, Suspensions-, Lösungs- oder Massepolymerisation herstellen. Die Copolymerisate gemäß Komponente B besitzen vorzugsweise Molekulargewichte $M_w$ (Gewichtsmittel, ermittelt duch Lichtstreuung oder Sedimentation) zwischen 15 000 und 200 000.

Besonders bevorzugte erfindungsgemäße Copolymerisate B sind auch statistisch aufgebaute Copolymerisate aus Styrol und Maleinsäureanhydrid, die durch eine kontinuierliche Masse- oder Lösungsmittelpolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt zwischen 5 und 25 Gew.-%.

Die Molekulargewichte (Zahlenmittel $\overline{M}_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60 000 bis 200 000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Anstelle von Styrol können die Vinylcopolymerisate B auch kernsubstituierte Styrole wie p-Methylstyrol, Vinyltoluol, 2,4-Dimethylstyrol, und andere substituierte Styrole wie α-Methylstyrol enthalten.

Komponente C

Die Pfropfpolymerisate C) umfassen z.B. Pfropfcopolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Polymerisate C) sind partiell vernetzt und besitzen Gelgehalte von über 20 Gew.-%, vorzugsweise über 40 Gew.-%, insbesondere über 60 Gew.-%.

Bevorzugte Pfropfpolymerisate C) umfassen Pfropfpolymerisate aus:

C.1) 5 bis 95, vorzugsweise 30 bis 80, Gew.-Teile, einer Mischung aus

C.1.1) 50 bis 95 Gew.-Teilen Styrol, α-Methylstyrol, halogen- oder methylkernsubstituiertem Styrol, $C_1$-$C_8$-Alkylmethacrylat, insbesondere Methylmethacrylat, $C_1$-$C_8$-Alkylacrylat, insbesondere Methylacrylat, oder Mischungen dieser Verbindungen und

C.1.2) 5 bis 50 Gew.-Teilen Acrylnitril, Methacrylnitril $C_1$-$C_8$-Alkylmethacrylaten, insbesondere Methylmethacrylat, $C_1$-$C_8$-Alkylacrylat, insbesondere Methylacrylat, Maleinsäureanhydrid, $C_1$-$C_4$-alkyl bzw. phenyl-N-substituierte Maleinimide oder Mischungen dieser Verbindungen auf

C.2) 5 bis 95, vorzugsweise 20 bis 70, Gew.-Teilen Polymerisat mit einer Glasübergangstemperatur unter -10°C.

Als Pfropfgrundlage C2 sind bevorzugt Polybutadien, Butadien/Styrol-Copolymerisate und Acrylatkauschuke.

Bevorzugte Pfropfpolymerisate C) sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate C) sind z.B. ABS-Polymerisate, wie sie z.B. in der DE-A-2 035 390 (= US-A-3 644 574) oder in der DE-A-2 248 242 (= GB-A-1 409 275) beschrieben sind.

Bevorzugte Pfropfpolymerisate C) sind ferner Pfropfpolymerisate, die durch Pfropfreaktion von

I. 10 bis 70, vorzugsweise 15 bis 50, insbesondere 20 bis 40, Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35, Gew.-%, bezogen auf Gemisch, Acrylnitril oder (Meth-)Acrylsäureester und 50 bis 90, vorzugsweise 65 bis 80 Gew.-% bezogen auf Gemisch, Styrol auf

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage

erhältlich sind,
wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser $d_{50}$ des Pfropfpolymerisats C) 0,05 bis 2, vorzugsweise 0,1 bis 0,6 μm, betragen.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C) auch solche Produkte verstanden, die durch Polymerisation der Pfropfmonomeren in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimesionslos.

Die mittlere Teilchengröße $d_{50}$ ist der Durchmesser, oberhalb und unterhalb dessen jeweils 50 Gew.-% der Teilchen liegen. Er kann mittels, Ultrazentrifugenmessungen (W. Scholtan, H. Lange, Kolloid, Z. und Z. Polymere 250 (1972), 782-796) bestimmt werden.

Besonders bevorzugte Pfropfpolymerisate C) sind z.B. auch Pfropfpolymerisate aus

(a) 20 bis 90 Gew.-%, bezogen auf C), Acrylatkautschuk mit einer Glasübergangstemperatur unter -20°C als Pfropfgrundlage und

(b) 10 bis 80 Gew.-%, bezogen auf C), mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Acrylatkautschuke (a) der Polymerisate C) sind vorzugsweise Polymerisate aus Acrylsäurealkylestern,

gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, n-Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindunen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere"polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in den Offenlegungsschriften DE-A-37 04 657, DE-A-37 04 655, DE-A-36 31 540 und DE-A-36 31 539 beschrieben werden.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme-Verlag, Stuttgart 1977).

Die für die bevorzugte Ausführungsform der gemeinsamen Fällung mit dem Tetrafluoroethylenpolymerisat E) zu verwendenden wäßrigen Dispersionen von Pfropfpolymerisat C) besitzen im allgemeinen Feststoffgehalte von 25 bis 60, vorzugsweise von 30 bis 40 Gew.-%.

Komponente D

Als Flammschutzmittel werden die oben erwähnten und beschriebenen mehrkernigen Phosphorsäureester eingesetzt.

Komponente E

Die fluorierten Polyolefine E) sind hochmolekular und besitzen Glasübergangstemperaturen von über -30°C, in der Regel von über 100°C, Fluorgehalte, vorzugsweise von 6 bis 76, insbesondere von 70 bis 76, Gew.-% mittlere Teilchendurchmesser $d_{50}$ von 0,05 bis 1000, vorzugsweise 0,08 bis 20 µm. Im allgemeinen haben die fluorierten Polyolefine E) eine Dichte von 1,2 bis 2,3 g/cm$^3$. Bevorzugte fluorierte Polyolefine E) sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl und Related Polymers" von Schildknecht, John Wiley & Sons, Inc., New York, 1962, Seite 484 - 494; "Fluorpolymers" von Wall, Wiley-Interscience, John Wiley & Sons, Inc., New York, Band 13, Seite 623-654; "Modem Plastics Encyclopedia", 1970 - 1971, Band 47, Nr. 10 A, Oktober 1970, McGraw-Hill, Inc., New York, Seite 134 und 774; "Modern Plastics Ecyclopedia", 1975 - 1976, Oktober 1975, Band 52, Nr. 10 A, McGraw-Hill, Inc., New York, Seite 27, 28 und 472 und US -A-3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxiddisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z.B. US-A-2 393 967). Je nach Einsatzform kann die Dichte dieser Materialien zwischen 1,2 und 2,3 g/cm$^3$, die mittlere Teilchengröße zwischen 0,05 und 1000 µm liegen.

Erfindungsgemäß bevorzugten fluorierten Polyolefine E) sind Tetrafluorethylenpolymerisate und haben mittlere Teilchendurchmesser von 0,5 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate E) mit Emulsionen der Pfropfpolymerisate C) eingesetzt.

Geeignete, in Pulverform einsetzbare fluorierte Polyolefine E) sind Tetrafluorethylenpolymerisate mit mittleren Teilchendurchmesser von 100 bis 1000 µm und Dichten von 2,0 g/cm$^3$ bis 2,3 g/cm$^3$.

Zur Herstellung einer koagulierten Mischung aus C) und E) wird zuerst eine wäßrige Emulsion (Latex) eines Pfropfpolymerisates C) mit mittleren Latexteilchendurchmesser von 0,05 bis 2 µm, insbesondere 0,1 bis 0,6 µm mit einer feinteiligen Emulsion eines Tetrafluorethylenpolymerisates E) in Wasser mit mittleren Teilchendurchmesser von 0,05 bis 20 µm, insbesondere von 0,08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate C) besitzen Feststoffgehalte von 25 bis 50 Gew.-%, vorzugsweise von 30 bis 45 Gew.-%.
Die Mengenangabe bei der Beschreibung der Komponente C schließt den Anteil des Pfropfpolymerisats für die koagulierte Mischung aus Pfropfpolymerisat und fluoriertem Polyolefinen.
In der Emulsionsmischung liegt das Gewichtsverhältnis Pfropfpolymerisat C) zum Tetrafluorethylenpolymerisat E) bei 95:5 bis 60:40. Anschließend wird die Emulsionsmischung in bekannter Weise koaguliert, beispiesweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.
Geeignete Tetrafluorethylenpolymerisat-Emulsionen sind handelsübliche Produkte und werden beispielsweise von der Firma DuPont als Teflon® 30 N angeboten.

Komponente F

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.
Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).
Bevorzugte Polyalkylenterephthalate enthalten mindestens 80, vorzugsweise 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder butandiol-1,4-reste.
Die bevorzugten Polyalkylenterephthalate können neben Terephthalsäureresten bis zu 20 Mol-% Rest anderer aromatischer Dicarbonsäuren mit 8 bis 14 C-Atomen oder aliphatischen Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain-, Cyclohexandiessigsäure.
Die bevorzugten Polyalkylenterephthalate können neben Ethylenglykol- bzw. Butandiol-1,4-Resten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylenpropandiol-1,3, Neopentylglykol, Pentandiol-1,5, Hexandiol-1,6, Cyclohexandimethanol-1,4, 3-Methylpentandiol-2,4, -Methylpentandiol-2,4, 2,2,4-Trimethylpentandiol-1,3 und 1,6,2-Ethylhexandiol-1,3, 2,2-Diethylpropandiol-1,3, Hexandiol-2,5, 1,4-Di(ß-hydroxyethoxy)-benzol, 2,2-bis(3-ß-hydroxyethoxyphenyl)-propan und 2,2-bis-(4-hydroxypropoxyphenyl)-propan (DEA-24 07 674, 24 07 776, 27 15 932).
Die Polyalkylenterephthalate können durch Einbau relativ kleiner Mengen 3- oder 4-wertiger Alkohole oder 3- oder 4-basischer Carbonsäuren, wie sie z.B. in der DE-A-1 900 270 und der US-A-3 692 744 beschrieben sind, verzweigt werden. Beispiele für bevorzugte Verzweigungsmittel sind Trimesinsäure, Trimellitsäure, Trimethylolethan und -propan und Pentaerythrit.
Es ist ratsam, nicht mehr als 1 Mol-% des Verzweigungsmittels, bezogen auf die Säurekomponente, zu verwenden.
Besonders bevorzugt sind Polyalkylenterephthalate, die allein aus Terephthalsäure und deren reaktionsfähigen Derivaten (z.B. Dialkylestern) und Ethylenglykol und/oder Butandiol-1,4 hergestellt worden sind (Polyethylen- und Polybutylenterephthalat), und Mischungen dieser Polyalkylenterephthalate.
Bevorzugte Polyalkylenterephthalate sind auch Copolyester, die aus mindestens zwei der oben genannten Säurekomponenten und/oder aus mindestens zwei der oben genannten Alkoholkomponenten hergestellt sind, besonders bevorzugte Copolyester sind Poly-(ethylenglykol/butandiol-1,4)-terephthalate.
Die als Komponente F vorzugsweise verwendeten Polyalkylenterephthalate besitzen im allgemeinen eine Intrinsic-Viskosität von ca. 0,5 bis 1,5 dl/g, vorzugsweise 0,5 bis 1,3 dl/g, jeweils gemessen in Phenol/o-Dichlorbenzol (1:1 Gew.-Teile) bei 25°C.
Die einzelnen Komponenten A), B), C), D), E) oder F) können jeweils auch als Mischung eingesetzt werden.
Die erfindungsgemäßen Formmassen können übliche Additive, wie Gleit- und Entformungsmittel, Nukleiiermittel, Antistatika, Stabilisatoren, Füll- und Verstärkungsstoffe sowie Farbstoffe und Pigmente enthalten.
Gefüllte bzw. verstärkte Formmassen können bis zu 60, vorzugsweise 10 bis 40 Gew.-%, bezogen auf die gefüllte bzw. verstärkte Formmasse, Füll- und/oder Verstärkungsstoffe enthalten. Bevorzugte Verstärkungsstoffe sind

Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen, bestehend aus den Komponenten A bis F und gegebenenfalls weiteren bekannten Zusätzen wie Stabilisatoren, Farbstoffen, Pigmenten, Gleit- und Entformungsmitteln, Füll- und Verstärkungsstoffen, Nukleiermittel sowie Anstitatika, werden hergestellt, indem man die jeweiligen Bestandteile in bekannter Weise vermischt und bei Temperaturen von 200°C bis 330°C in üblichen Aggregaten wie Innenknetern, Extrudern und Doppelwellenschnecken schmelzcompoundiert oder schmelzextrudiert, wobei die Komponente E) vorzugsweise in Form der bereits erwähnten koagulierten Mischung eingesetzt wird.

Gegenstand der vorliegenden Erfindung ist somit auch ein Verfahren zur Herstellung von thermoplastischen Formmassen, bestehend aus den Komponenten A bis F sowie gegebenenfalls Stabilisatoren, Farbstoffen, Pigmenten, Gleit- und Entformungsmitteln, Füll- und Verstärkungsstoffen, Nukleirmitteln sowie Antistatika, das dadurch gekennzeichnet ist, daß man die Komponenten A bis F sowie gegebenenfalls Stabilisatoren, Farbstoffe, Pigmente, Fließmittel, Füll- und Verstärkungsstoffe, Gleit- und Entformungsmittel, Nukleirmittel und/oder Antistatika nach erfolgter Vermischung bei Temperaturen von 200 bis 330°C in gebräuchlichen Aggregaten schmelzcompoundiert oder schmelzextrudiert, wobei die Komponente F vorzugsweise in Form einer koagulierten Mischung mit der Komponente C eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit und Spannungsrißbeständigkeit der eingesetzten Kunststoffe gestellt werden.

Eine weitere Form der Verarbeitung ist die Herstellung von Formkörpern durch Tiefziehen aus vorher hergestellten Platten oder Folien.

## Beispiele

Beispiel 1

Synthese des Phosphorsäureesters gemäß Formel (Ia)

Unter Feuchtigkeitsausschluß werden in einer Rührapparatur 3.40 g Pentaerythritol und 12.12 g Triethylamin gelöst in 150 ml absolutem tert.-Butylmethylketon vorgelegt. Es werden 26.86 g Diphenylchlorophosphat innerhalb von 90 min zugetropft, wobei so stark gekühlt wird, daß die Reaktionstemperatur bei 0-1°C gehalten wird. Nach der Zugabe wird 10 h bei Raumtemperatur nachgerührt. Der entstandene Niederschlag wird abfiltriert, die organische Lösung wird mehrfach mit Wasser gewaschen und mit Natriumsulfat getrocknet. Nach dem Abdampfen des Lösungsmittels erhält man 25.76 g eines farblosen Feststoffes.

| Elementaranalyse: | | | |
|---|---|---|---|
| | C | H | P |
| berechnet | 59.78 | 4.54 | 11.63 |
| gefunden | 59.72 | 4.61 | 11.48 |

Beispiel 2

Synthese des Phosphorsäureesters gemäß Formel (Ib)

Unter Feuchtigkeitsausschluß werden in einer Rührapparatur 4.42 g Trimethylolpropan und 12.12 g Triethylamin gelöst in 150 ml absolutem tert.-Butylmethylketon vorgelegt. Es werden 26.86 g Diphenylchlorophosphat innerhalb von 90 min zugetropft, wobei so stark gekühlt wird, daß die Reaktionstemperatur bei 0-1°C gehalten wird. Nach der Zugabe wird 10 h bei Raumtemperatur nachgerührt. Der entstandene Niederschlag wird abfiltriert, die organische Lösung wird mehrfach mit Wasser gewaschen und mit Natriumsulfat getrocknet. Nach dem Abdampfen des Lösungsmittels erhält man 26.16 g eines farblosen Feststoffes.

| Elementaranalyse: | | | |
|---|---|---|---|
| | C | H | P |
| berechnet | 60.73 | 4.97 | 11.19 |
| gefunden | 60.82 | 5.04 | 11.03 |

Anwendungstechnische Prüfungen

**Komponente A**

Polycarbonat auf Basis Bisphenol A mit einer relativen Lösungsviskosität von 1,26 bis 1,28 gemessen in Methylenchlorid bei 25°C und einer Konzentration von 0,5 g/100 ml.

**Komponente B**

Styrol/Acrylnitril-Copolymerisat mit einem Styrol/Acrylnitril-Verhältnis von 72:28 und einer Grenzviskosität von 55 dl/g (Messung in Dimethylformamid bei 20°C).

**Komponente C**

Pfropfpolymerisat von 45 Gew.-Teilen Styrol und Acrylnitril im Verhältnis 72:28 auf 55 Gew.-Teile teilchenförmigen vernetzten Polybutadienkautschuk (mittlerer Teilchendurchmesser $d_{50}$ = 0,4 µm), hergestellt durch Emulsionspolymerisation.

**Komponente D**

Phosphor-Verbindung gemäß Formel (Ia)

**Komponente E**

Tetrafluorethylenpolymerisat als koagulierte Mischung aus einer SAN-Pfropfpolymerisat-Emulsion gemäß C) in Wasser und einer Tetrafluorethylenpolymerisat-Emulsion in Wasser. Das Gewichtsverhältnis Pfropfpolymerisat C) zum Tetrafluorethylenpolymerisat D) in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser ($d_{50}$) von 0,4 µm.

**Herstellung von Komponente E**

Die Emulsion des Tetrafluorethylenpolymerisats (Teflon 30 N der Fa. DuPont) wird mit der Emulsion des SAN-Pfropfpolymerisats C) vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Herstellung von Prüfkörpern**

Die in Tabelle 1 angegebenen Mischungen werden in einem 3-1-Innenkneter hergestellt. Aus diesen Mischungen werden mit Hilfe einer Spritzgießmaschine Typ Arburg 270 E bei 260°C Prüfkörper mit den Abmessungen 127 x 12.7 x 1.6 mm hergestellt.

Tabelle 1

| Zusammensetzung (Angaben in Gew.-Teilen) | | | | | |
|---|---|---|---|---|---|
| Beispiel | Komponenten | | | | |
| | A | B | C | E | D Verbindung der Formel (Ia) |
| 3.1 | 67 | 10 | 7.5 | 3.5 | 11.5 |
| 3.2 | 67 | 10 | 7.5 | 3.5 | 12.5 |
| 3.3 | 67 | 10 | 7.5 | 3.5 | 13.5 |
| 3.4 | 67 | 10 | 7.5 | 3.5 | 14.5 |
| 3.5 | 67 | 10 | 7.5 | 3.5 | 15.5 |
| 3.6 | 67 | 10 | 7.5 | 3.5 | 16.5 |

**Prüfung des Brandverhaltens**

Die Prüfkörper werden vertikal so montiert, daß die Unterseite des Probekörpers 305 mm über einem Streifen Baumwolle-Verbandstoff befindet. Jeder Probekörper wird für die Dauer von 10 s beflammt. Zum Entzünden wird ein Bunsenbrenner mit 10 mm hohen blauen Flamme von Methan benutzt. Nach dem Entfernen der Zündquelle wird die Nachbrennzeit gemessen und die Abtropfneigung beurteilt. Für jeden Versuch werden fünf Probekörper verwendet, die Brennzeiten werden gemittelt.

| Beispiel | Brandverhalten | |
|---|---|---|
| | Durchschnittl. Brenndauer [s] | Brennendes Abtropfen |
| 3.1 | 25.0 | nein |
| 3.2 | 7.6 | nein |
| 3.3 | 4.0 | nein |
| 3.4 | 3.5 | nein |
| 3.5 | 2.5 | nein |
| 3.6 | 1.3 | nein |

**Patentansprüche**

1. Phosphorsäureester der Formel (I) worin

L für die folgenden Strukturen steht:

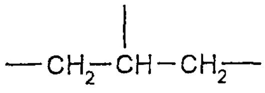

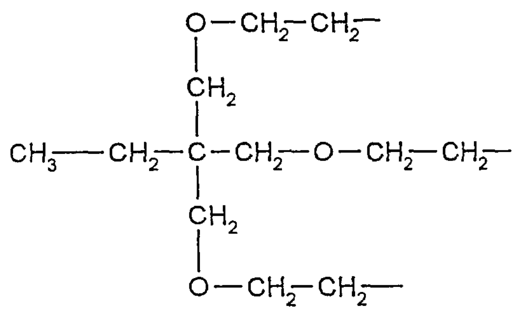

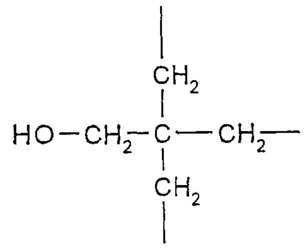

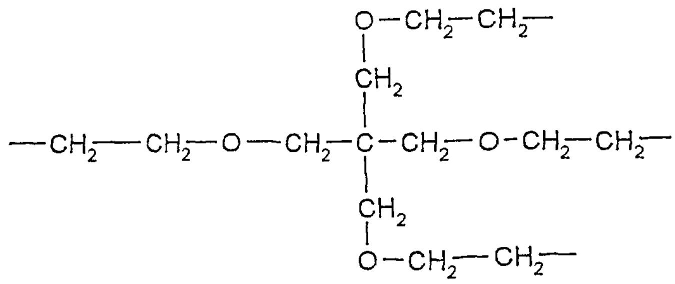

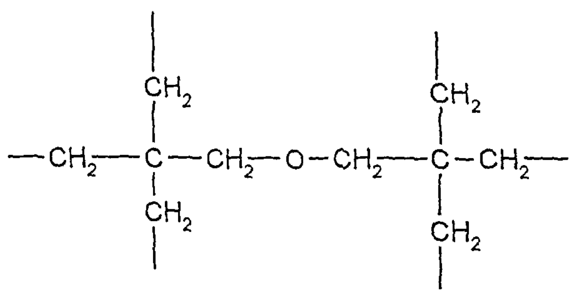

Ar ein Arylrest oder Alkarylrest ist

und

n 3,4 oder 6 ist.

**2.** Phosphorsäureester gemäß Anspruch 1, worin

Ar für Phenyl, Tolyl, Xylenyl, p-Octylphenyl, p-Butylphenyl oder Naphthyl steht.

**3.** Phosphorsäureester gemäß Anspruch 1 oder 2, worin

Ar für Phenyl steht.

**4.** Verwendung der Phosphorsäureester gemäß Anspruch 1 als Flammschutzmittel.

**5.** Thermoplastische Formmasse enthaltend

A) 40 bis 98 Gew.-Teilen aromatisches Polycarbonat, und

D) 0,5 bis 20 Gew.-Teilen mehrkerniger Phosphorsäureester der Formel (I)

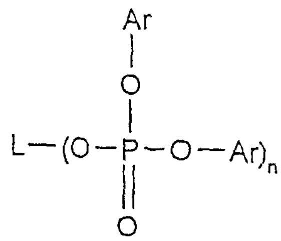

worin

L ein n-wertiger linearer oder verzweigter aliphatischer Kohlenwasserstoffrest Rest mit 2 bis 30 C-Atomen ist, der mit OH substituiert sein kann und bis zu 8 Etherbrücken enthalten kann,

Ar ein Arylrest oder Alkylarylrest ist

und

n 2 bis 6 ist,

wobei eines oder mehrere Polymere, ausgewählt aus der Gruppe der folgenden Komponenten zusätzlich enthalten sein kann:

B) 3 bis 50 Gew.-Teile Vinyl-Copolymerisat aus

B.1) 50 bis 98 Gew.-Teilen Styrol, α-Methylstyrol, kernsubstituierten Styrolen, $C_1$-$C_8$-Alkylmethacrylaten, $C_1$-$C_8$-Alkylacrylaten oder Mischungen daraus und

B.2) 50 bis 2 Gew.-Teilen Acrylnitril, Methacrylnitril, $C_1$-$C_8$-Alkylmethacrylaten, $C_1$-$C_8$-Alkylacrylaten, Maleinsäureanhydrid, N-substituierten Maleinimiden und Mischungen daraus,

C) 0,5 bis 40 Gew.-Teilen Gew.-Teilen Pfropfpolymerisat,

E) 0,05 bis 5 Gew.-Teilen fluoriertes Polyolefin mit einem mittleren Teilchendurchmesser von 0,05 bis 1000 µm, einer Dichte von 1,2 bis 2,3 g/cm$^3$ und einem Fluorgehalt von 65 bis 76 Gew.-%,

F) 2 bis 30 Gew.-Teile Polyalkylenterephthalat.

**6.** Thermoplastische Formmasse gemäß Anspruch 5, enthaltend Phosphosäureester der Formel (I), worin L für die folgenden Strukturen steht :

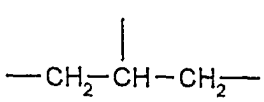

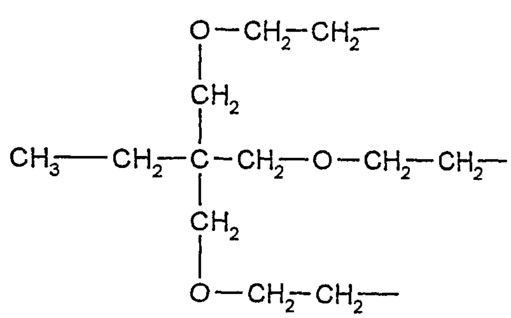

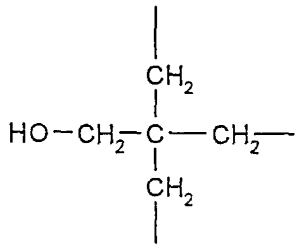

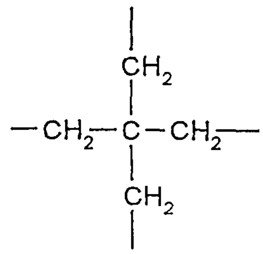

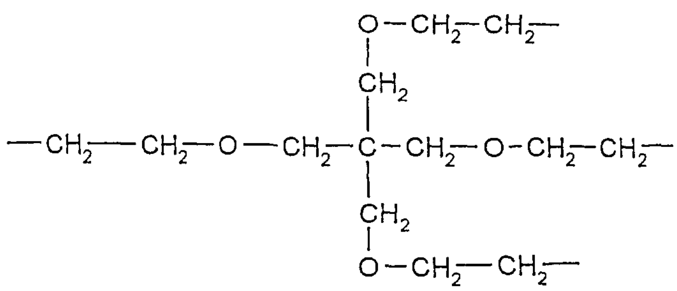

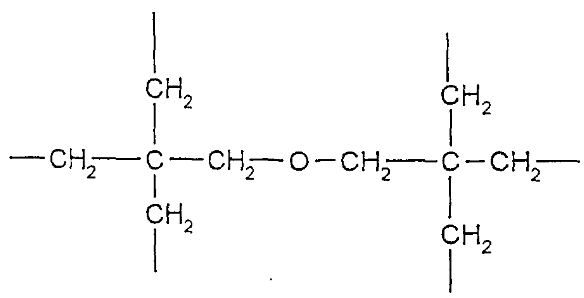

**7.** Thermoplastische Formmasse gemäß Anspruch 5 enthaltend Phosphorsäureester der Formel (I), worin

Ar für Phenyl, Tolyl, Xylenyl, p-Octylphenyl, p-Butylphenyl oder Naphthyl steht,

**8.** Thermoplastische Formmasse gemäß Anspruch 5 bis 7, wobei eines oder mehrere Polymere ausgewählt aus der gruppe der Komponenten B), C), E) und F) enthalten ist.

**9.** Thermoplastische Formmassen gemäß Anspruch 5 bis 8, enthaltend Zusatzstoffe, ausgewählt aus der Gruppe der Stabilisatoren, Farbstoffe, Pigmente, Gleit- und Entformungsmittel, Nukleiiermittel, Antistatika, Füll- und Verstärkungsstoffe.

**10.** Verwendung der thermoplastischen Formmassen gemäß Anspruch 5 bis 9 zur Herstellung von Formkörpern.

**11.** Formkörper, erhältlich aus thermoplastischen Formmassen gemäß Anspruch 5 bis 9.

**Claims**

**1.** Phosphoric acid esters of the formula (I)

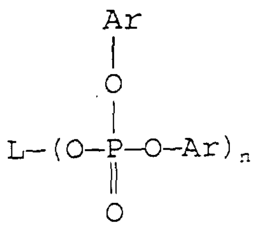

(I)

in which

L denotes the following structures:

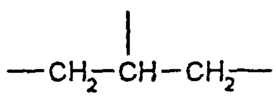

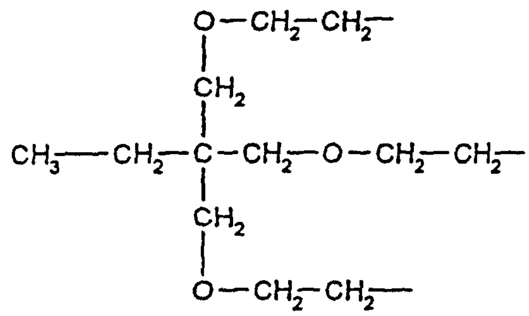

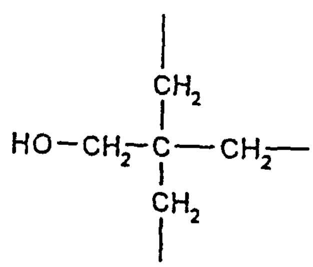

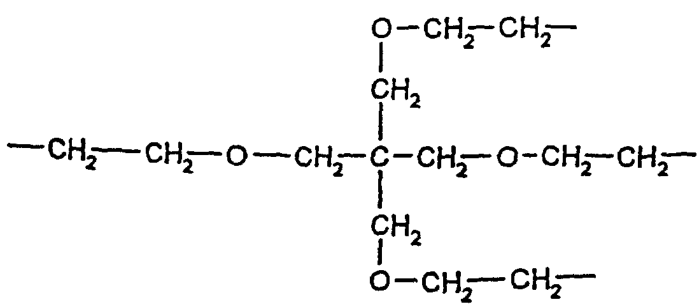

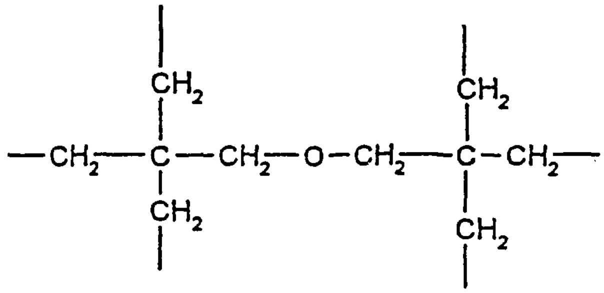

Ar is an aryl residue or alkaryl residue

and

n is 3, 4 or 6.

**2.** Phosphoric acid esters according to claim 1, in which

Ar denotes phenyl, tolyl, xylenyl, p-octylphenyl, p-butylphenyl or naphthyl.

**3.** Phosphoric acid esters according to claim 1 or 2, in which Ar denotes phenyl.

**4.** Use of the phosphoric acid esters according to claim 1 as flame retardants.

**5.** Thermoplastic moulding composition containing

A) 40 to 98 parts by weight of aromatic polycarbonate, and

D) 0.5 to 20 parts by weight of polycyclic phosphoric acid esters of the formula (I)

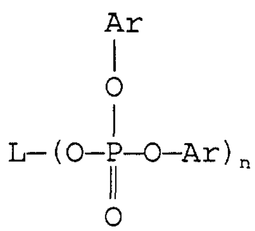

(I)

in which

L is an n-valent linear or branched aliphatic hydrocarbon residue with 2 to 30 C atoms, which may be OH-substituted and may contain up to 8 ether linkages,

Ar is an aryl residue or alkaryl residue

and

n is 2 to 6,

in which one or more polymers selected from the group comprising the following components can be additionally contained:

B) 3 to 50 parts by weight of vinyl copolymer prepared from

B.1) 50 to 98 parts by weight of styrene, α-methylstyrene, ring-substituted styrenes, $C_1$-$C_8$ alkyl methacrylates, $C_1$-$C_8$ alkyl acrylates or mixtures thereof and

B.2) 50 to 2 parts by weight of acrylonitrile, methacrylonitrile, $C_1$-$C_8$ alkyl methacrylates, $C_1$-$C_8$ alkyl acrylates, maleic anhydride, N-substituted maleimides and mixtures thereof,

C) 0.5 to 40 parts by weight of graft polymer,

E) 0.05 to 5 parts by weight of fluorinated polyolefin with an average particle diameter of 0.05 to 1,000 μm, a density of 1.2 to 2.3 g/cm$^3$ and a fluorine content of 65 to 76 wt.%,

F) 2 to 30 parts by weight of polyalkylene terephthalate.

**6.** Thermoplastic moulding composition according to claim 5, containing phosphoric acid esters of the formula (I) in which L denotes the following structures:

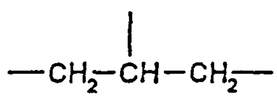

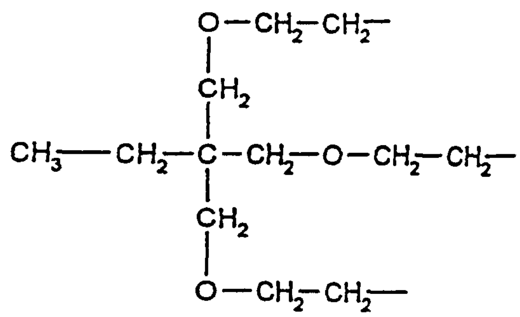

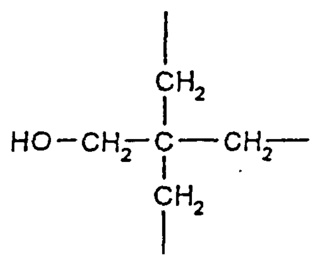

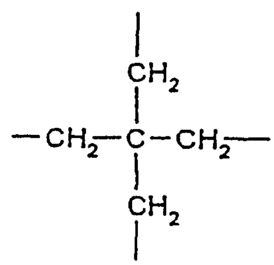

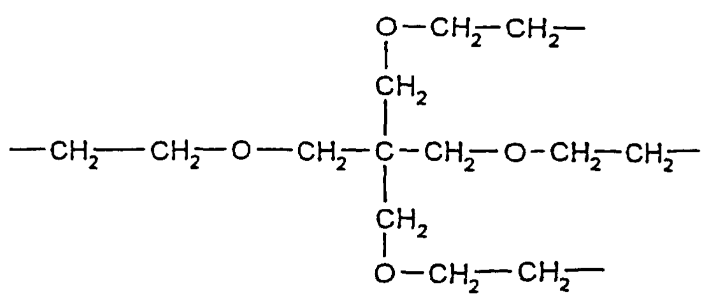

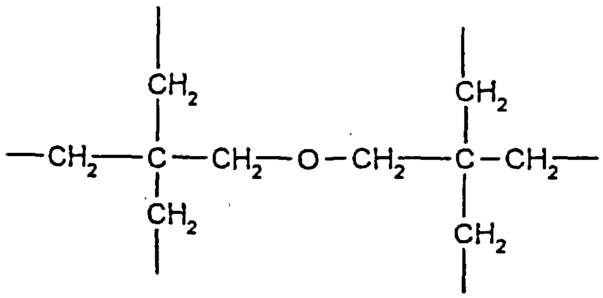

7. Thermoplastic moulding composition according to claim 5, containing phosphoric acid esters of the formula (I) in which

   Ar denotes phenyl, tolyl, xylenyl, p-octylphenyl, p-butylphenyl or naphthyl.

8. Thermoplastic moulding composition according to claims 5 to 7, in which one or more polymers selected from the group comprising the components B), C), E) and F) is contained.

9. Thermoplastic moulding compositions according to claims 5 to 8, containing additives selected from the group comprising stabilisers, dyes, pigments, lubricants and mould release agents, nucleating agents, antistatic agents, fillers and reinforcing materials.

10. Use of the thermoplastic moulding compositions according to claims 5 to 9 for the production of mouldings.

11. Mouldings obtainable from thermoplastic moulding compositions according to claims 5 to 9.

## Revendications

1. Esters phosphoriques de formule (I)

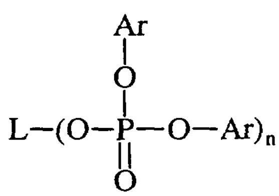

(I)

   dans laquelle

   L représente les structures suivantes :

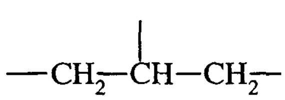

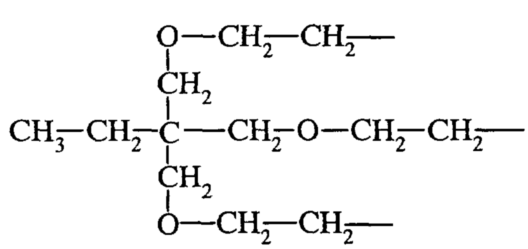

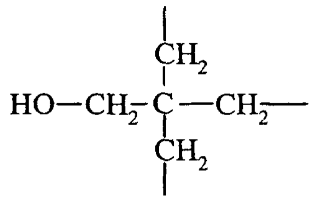

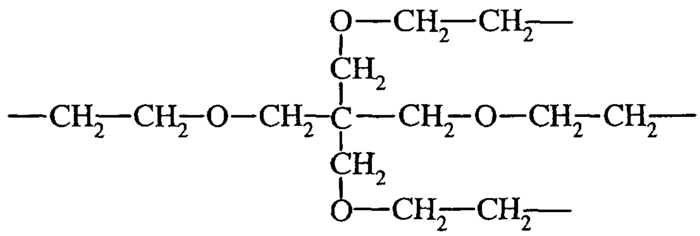

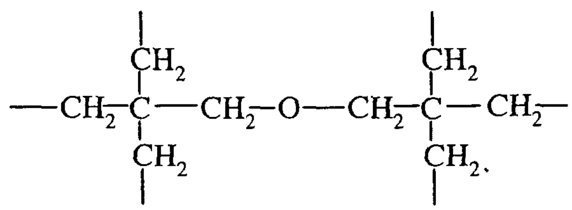

Ar représente un groupe aryle ou alkylaryle

et

n est égal à 3, 4 ou 6.

2. Esters phosphoriques selon la revendication 1, pour lesquels

Ar représente un groupe phényle, tolyle, xylényle, p-octylphényle, p-butylphényle, naphtyle.

3. Esters phosphoriques selon la revendication 1 ou 2, pour lesquels Ar représente un groupe phényle

4. Utilisation des esters phosphoriques selon la revendication 1, en tant qu'agents ignifugeants.

5. Matière à mouler thermoplastique contenant

A) 40 à 98 parties en poids d'un polycarbonate aromatique, et
D) 0,5 à 20 parties en poids d'esters phosphoriques polycycliques de formule (I)

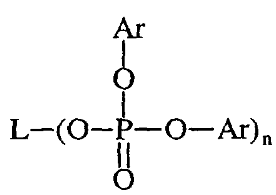

dans laquelle

L représente un radical hydrocarboné aliphatique linéaire ou ramifié en $C_2$-$C_{30}$, de valence n, qui peut porter des substituants OH et peut contenir jusqu'à huit ponts éther,

Ar représente un groupe aryle ou alkylaryle

et

n est un nombre allant de 2 à 6,

la matière à mouler pouvant contenir en outre un ou plusieurs polymères choisis dans le groupe des composants suivants :

B) 3 à 50 parties en poids d'un copolymère vinylique de

B.1) 50 à 98 parties en poids de styrène, d'α-méthylstyrène, de styrènes substitués dans le noyau, de méthacrylates d'alkyle en $C_1$-$C_8$, d'acrylates d'alkyle en $C_1$-$C_8$ ou leurs mélanges et

B.2) 50 à 2 parties en poids d'acrylonitrile, de méthacrylonitrile, de méthacrylates d'alkyle en $C_1$-$C_8$, d'acrylates d'alkyle en $C_1$-$C_8$, d'anhydride maléique, de maléimides substitués à l'azote et leurs mélanges,

C) 0,5 à 40 parties en poids d'un polymère greffé,

E) 0,05 à 5 parties en poids d'une polyoléfine fluorée à un diamètre de particule moyen de 0,05 à 1000 µm, une densité de 1,2 à 2,3 g/cm$^3$ et une teneur en fluor de 65 à 76 % en poids,

F) 2 à 30 parties en poids d'un téréphtalate de polyalkylène.

**6.** Matière à mouler thermoplastique selon la revendication 5, contenant des esters phosphoriques de formule (I) dans laquelle L représente les structures suivantes :

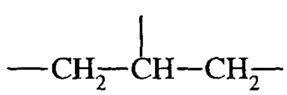

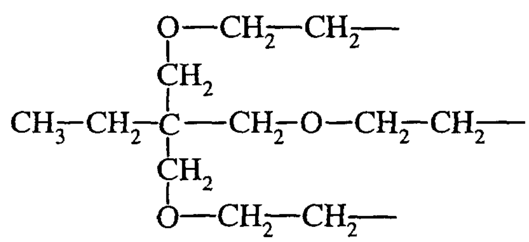

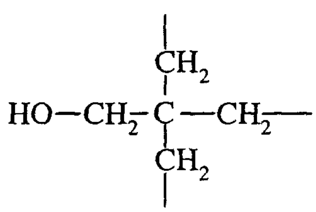

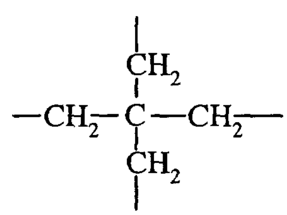

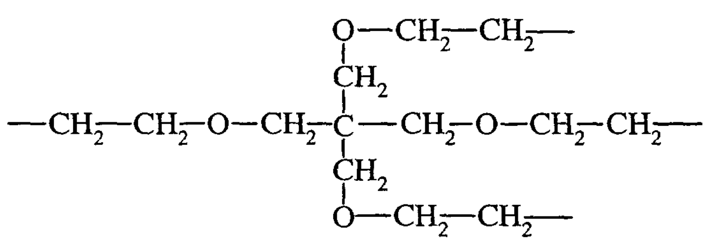

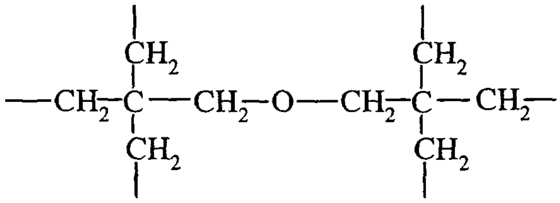

**7.** Matière à mouler thermoplastique selon la revendication 5, contenant des esters phosphoriques de formule (I) dans laquelle

Ar représente un groupe phényle, tolyle, xylényle, p-octylphényle, p-butylphényle ou naphtyle.

**8.** Matière à mouler thermoplastique selon les revendications 5 à 7, contenant un ou plusieurs polymères choisis dans le groupe des composants B), C), E) et F).

**9.** Matières à mouler thermoplastiques selon les revendications 5 à 8, contenant des additifs choisis dans le groupe des stabilisants, des colorants, des pigments, des agents lubrifiants et agents de démoulage, des agents de nucléation, des agents antistatiques, des matières de charge et matières renforçantes.

**10.** Utilisation des matières à mouler thermoplastiques selon les revendications 5 à 9 pour la fabrication d'objets moulés.

**11.** Objets moulés obtenus à partir des matières à mouler thermoplastiques selon les revendications 5 à 9.